# EUROPEAN PATENT SPECIFICATION

(11) **EP 4 269 999 B1**
(45) Date of publication and mention of the grant of the patent: **25.06.2025**
(21) Application number: 23169298.9
(22) Date of filing: 21.04.2023
(51) Int. Cl.: G01N 29/04, G01B 17/02, G01N 17/00, G01N 29/06, G01N 29/44

(54) **ULTRASONIC TOMOGRAPHY METHOD AND SYSTEM FOR EVALUATING PIPELINE CORROSION**
ULTRASCHALLTOMOGRAPHIEVERFAHREN UND SYSTEM ZUR BEURTEILUNG VON ROHRLEITUNGSKORROSION
PROCÉDÉ ET SYSTÈME DE TOMOGRAPHIE PAR ULTRASONS POUR ÉVALUER LA CORROSION D'UNE CANALISATION

(30) Priority: 29.04.2022 LT 2022518
(43) Date of publication of application: 01.11.2023
(73) Proprietor: Kaunas University of Technology, 44029 Kaunas (LT)
(72) Inventor: Raisutis, Renaldas, 50274 Kaunas (LT); Samaitis, Vykintas, 50166 Kaunas (LT); Mazeika, Liudas, 44299 Kaunas (LT); Jankauskas, Audrius, 60295 Didziuliai, Raseiniu r. sav. (LT); Zukauskas, Egidijus, 47240 Kaunas (LT)
(74) Representative: Klimaitiene, Otilija

(56) References cited:
- US-A1- 2007 000 328
- US-A1- 2014 208 852
- TONG JUNKAI ET AL: "Deep learning inversion with supervision: A rapid and cascaded imaging technique", ULTRASONICS, IPC SCIENCE AND TECHNOLOGY PRESS LTD. GUILDFORD, GB, vol. 122, 7 February 2022 (2022-02-07), pages 1 - 13, XP086962183, ISSN: 0041-624X, [retrieved on 20220207], DOI: 10.1016/J.ULTRAS.2022.106686
- ZHANG HAIYAN ET AL: "Ultrasonic guided wave tomography of pipes", AUDIO LANGUAGE AND IMAGE PROCESSING (ICALIP), 2010 INTERNATIONAL CONFERENCE ON, IEEE, PISCATAWAY, NJ, USA, 23 November 2010 (2010-11-23), pages 1729 - 1733, XP031846871, ISBN: 978-1-4244-5856-1
- PIERRE BELANGER ET AL: "Guided wave diffraction tomography within the born approximation", IEEE TRANSACTIONS ON ULTRASONICS, FERROELECTRICS, AND FREQUENCY CONTROL, IEEE, USA, vol. 54, no. 6, 1 June 2010 (2010-06-01), pages 1405 - 1418, XP011310821, ISSN: 0885-3010
- LOMAZZI L ET AL: "Convolutional Neural Networks for Ultrasonic Guided Wave-Based Structural Damage Detection and Localisation", STRUCTURAL HEALTH MONITORING 2021: ENABLING NEXT-GENERATION SHM FOR CYBER-PHYSICAL SYSTEMS; 13TH INTERNATIONAL WORKSHOP ON STRUCTURAL HEALTH MONITORING: ENABLING NEXT-GENERATION SHM FOR CYBER-PHYSICAL SYSTEMS, IWSHM 2021; STANFORD UNIVERSITY; MARCH 1, 17 March 2022 (2022-03-17), pages 558 - 565, XP009546669, ISBN: 978-1-60595-687-9, DOI: 10.12783/SHM2021/36301

## Description

### TECHNICAL FIELD

The invention belongs to the field of industrial and power industry diagnostic equipment, and, more specifically, it discloses a method and a system for ultrasonic (US) examination of industrial pipelines. It is a US tomography and machine learning-based US measurement system and measurement data analysis method that allows effective detection and assessment of localized and general corrosion of pipelines.

### TECHNICAL LEVEL

Corrosion is one of the most common and problematic mechanical degradation phenomena in engineering infrastructure components, such as metal pipes and structural panels. Oil, chemical, and gas industry pipelines transport products that contain substances that cause and promote corrosion. This leads to the origination of corrosion and corrosive defects in the pipeline walls and, accordingly, over a longer period of time, various pipeline infrastructure failures. If preventive measures are not taken in time, the increase and expansion of the above-mentioned corrosive defects continue until finally serious failures of the engineering infrastructure occur, often resulting in ecological pollution events.

In order to avoid environmental pollution and economic consequences caused by such failures, it is necessary to periodically or continuously monitor the level of corrosive damage to the pipeline infrastructure, and accordingly, to ensure the long-term integrity and functionality of the pipeline infrastructure components.

When pipe corrosion begins, due to its effect, a decrease in the thickness of the pipe wall occurs, that is, a defect appears in the pipe wall. Guided ultrasonic waves, when applied for the examination of such defects, propagate along the structure under examination (for example, a pipe wall) over long distances and interact with various defects in the pipe wall or structural plate. During this interaction, the reflection, local scattering, and transformation of the modes of propagating ultrasonic waves occurs at the defects and structural inhomogeneity of the object under examination. Also, due to changes in the thickness of the pipe wall or plate, the phase and group velocities of the propagating ultrasonic waves also change. Guided ultrasonic waves can be used to overlap the proximal and distal wall regions of the pipe under examination.

Several known patent documents disclose methods and means for detecting and evaluating pipe corrosion using guided ultrasonic waves.

US patent application US2021/0310995 (priority date 18-09-2009) describes a method for accurately measuring changes in pipe wall thickness. The thickness is determined by US testing, where many measurements of the wall thickness are made with a fixed sensor in the same place and eliminating errors related to noise and temperature changes. A highly sensitive receiver converts each reflected pulse into waves that are averaged with measurements of other pulses. In the resulting average wave, each waveform is analyzed to determine the extremes and inflection points of each reflected pulse. This analysis makes it possible to accurately determine the time between reflected pulses. Thus, within a few weeks, an accurate picture of the corrosion at the location of the pipe wall can be reliably determined. However, the document only discloses the measurement of the local reduction (caused by corrosion) of the pipe wall thickness. Meanwhile, in the present invention, the application of guided US waves is not limited to local wall thickness measurement.

European patent application EP1698894A2 (priority date 04-03-2005) describes the use of guided ultrasound waves to examine pipes and the use of signal processing methods. This document suggests using ultrasound frequencies between 1kHz and 100kHz. Long-range guided waves are said to travel several tens of meters along the pipe and reflect off the defective areas of the pipe. The document presents configuration of a system of ultrasonic transducers arranged in a circle around the pipe. It is indicated that signal processing is performed in the frequency domain in order to eliminate the influence of the excitation signal. However, a drawback of the concept disclosed here is that it requires a sufficiently large number of ultrasonic transducers arranged in a circle around the pipe under examination to detect and evaluate the corrosion. For example, in paragraph [0055] the amount of ultrasonic transducers is: 16 - for a 7.62 cm diameter pipe, and 32 - for a 15.64 cm diameter pipe.

Another US patent application US2021/0333238A1 (priority date 27-04-2020) discloses the concept of rings of two groups of ultrasonic transducers arranged in a circle around a pipe. These rings are spaced apart at a certain distance, one of them sends and the other receives guided longitudinal or torsional (rotational) ultrasonic waves. Pipe wall defects are detected between the sending and receiving transducers by time-frequency analysis of received ultrasonic guided wave signals and propagation time measurements. A disadvantage of the concept described here is that it requires a sufficiently large number of ultrasonic transducers arranged in a circle around the pipe. Also, it is necessary to use the ring arrangement topology of two groups of ultrasonic transducers.

Another US patent US11022436B2 (priority date 11-08-2016) discloses a method for measuring pipe wall thickness, which is based on the comparison of time-frequency dispersion maps calculated for propagating guided waves in a defective and non-defective region of a plate or pipe under examination. Electromagnetic acoustic transducers (EMAT) are used to generate symmetric transverse-longitudinal wave modes (SH) and asymmetric transverse-longitudinal wave modes (AH). The method disclosed in this document is limited to work only with the aforementioned SH- and AH-mods and EMAT-type converters.

Another international patent application (priority date 28-07-2010) WO2012013942A1 discloses the concept of placing ultrasonic transducers around the test tube. Also, it is indicated here that the analysis of the values of several reflections from the peak amplitudes and the damping analysis, also determination of the reflection coefficient are carried out. The drawback of the technical solution concept disclosed here is that it requires a sufficiently large number of ultrasonic transducers arranged in a circle around the pipe (*"at least two sets of transducers"*). Also, to perform the analysis of the measurement signal, no less than two reflections from internal defects in the pipe wall are required.

Further prior arts, relevant to the present invention, are non-patent documents **[4], [5], [6], [7],** and the US patent documents US20140208852A1 and US20070000328A1.

The document [4] by *Tong Junkai et al* discloses a solution with the deep learning inversion with supervision (DLIS) and applying it for corrosion mapping in guided wave tomography. The inversion results show that when dealing with multiple defects of complex shape *on a plate-like structure,* DLIS methods can reduce the scale of training set effectively compared with other deep learning algorithms in experiment because a good starting model is provided and the nonlinearity between the global minimum and observed wave field is greatly reduced. In terms of reconstruction accuracy using experimental data, the thickness maps produced by DLIS are reliable with high accuracy. With few modifications, this method can be conveniently extended to 3D cases. These results imply that DLIS is one of the promising methods to be applied in fields with similar physics like nondestructive evaluation (NDE), biomedical imaging and geophysical prospecting.

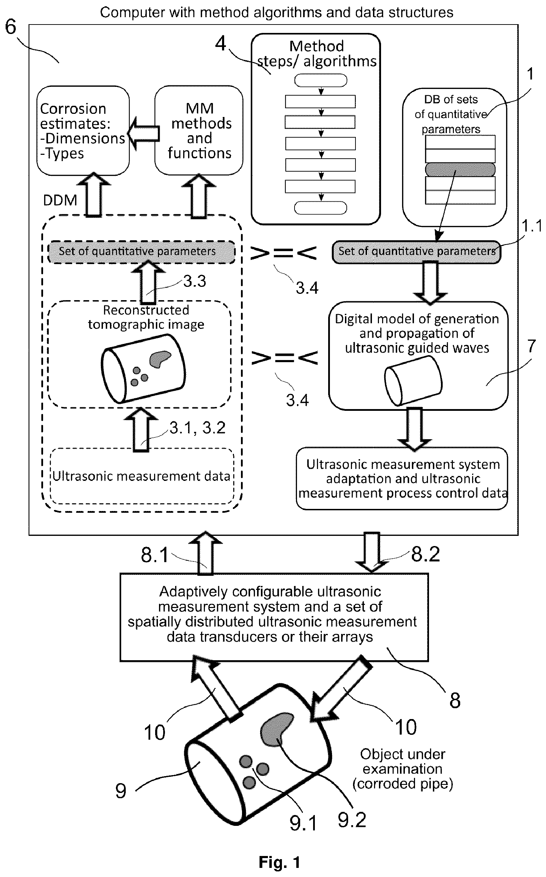

The US patent application US20140208852A1 discloses systems, methods and computer storage mediums *accurately measure wall thickness in a region of interest included in complex curved structures.* Embodiments of the present disclosure relate to generating a wall thickness loss distribution map of a region of interest that provides an accurate representation of wall thickness for the region of interest included in a complex curved structure. The wall thickness loss distribution map is generated from a two-dimensional model of the wall thickness loss distribution of the region of interest. The two-dimensional model is converted from a three-dimensional representation of the wall thickness loss distribution of the region of interest. The three-dimensional representation of the wall thickness is generated by ultrasonic waves generated by a transducer system that propagated through the region of interest. *In one embodiment, presented in* *Fig.1* *illustrates a thickness mapping configuration, according to an embodiment, where a region of interest 105 may be a portion of pipe 101 that is under continuous analysis to determine whether non-uniformity in the wall thickness for the region of interest 105 exists.*

The document [5] by *Zhang Haiyan et al* discloses ultrasonic guided wave tomography as an effective nondestructive evaluation technique for pipe-like structures. *Guided waves propagating in pipe with damage* are simulated using the finite element and the first arrival times of the received signals are extracted as input data of tomography. Alterative reconstruction technique (ART) is used to modify the slowness value of each grid unit in ray tracing. Tomographic reconstructions are performed for damages of different positions and shapes in pipes. The results show that guided wave tomography can depict accurately the locations and sizes of the damages.

The document [6] by *Belanger et al* discloses *detection and sizing of corrosion in pipelines and pressure vessels over large, partially accessible areas is of growing interest in the petrochemical industry.* Low-frequency guided wave diffraction tomography is a potentially attractive technique to rapidly evaluate the thickness of large sections of partially accessible structures. Finite element simulations of a 64-element circular array on a plate show that when the scattering mechanism of the object to be reconstructed satisfies the Born approximation, the reconstruction of the thickness is accurate. However, the practical implementation is more challenging because the incident field is not known. This paper describes the baseline subtraction approach commonly used in structural health monitoring applications and proposes a new approach in which the measurement of the incident field is not required when using a circular array of transducers. Experimental results demonstrate that ultimately the scattering from the array of transducers is a major source of error in the tomographic reconstruction, but when there is no scattering from the array of transducers the reconstructions are very similar to the finite element simulations.

The US patent application US20070000328A1 discloses an ultrasonic method and apparatus utilizing phased array technology f*or obtaining accurate crack height measurements* in materials where crystallographic structure creates beam reduction effects. The method is for measuring the through-wall dimension of a crack using an ultrasonic phased array system and time-of-flight simulation software.

The document [7] by *Lomazzi et al* discloses convolutional neural networks (CNNs) and ultrasonic guided waves being are combined into a unique framework, to perform damage detection and localisation *in plate-like structures.* Guided waves are excited and sensed by a network of sensors permanently installed on the structure. The information acquired is then converted into grayscale image as is, without performing any prior feature extraction procedure, which is further analysed by a set of CNNs. First, a classifier is employed to perform damage detection. In case damage is identified, the grayscale image is then analysed by two regression CNNs to localise the damage.

The reviewed pipeline corrosion detection and assessment solutions have at least the following disadvantages:
- few documents (US20140208852A1, [5] by *Zhang Haiyan,* and [6] by *Belanger*) disclose ultrasonic measurements related to industrial pipes inspection. While other documents are directed to plate-like structures, not specific for pipes. The US20140208852A1 mentions only local inspection of pipe wall in a relatively small region of interest, by positioned US transducers arround it;
- Complex configurations of many US transducers arranged around the pipe under test, for example, in, [4] by *Tong Junkai et al* or [6] by *Belanger et al.* Otherwise, [5] by *Zhang Haiyan* discloses a simulation of guided ultrasonic signals propagating in a pipe wall for detecting damages as obstacles, however, is not directed to specific implementations and setups of the ultrasonic measurement;
- Known solutions (e.g., [6] by *Belanger et al*) cannot be used for examination of the sector along the pipe if the US transducers are not arranged in a circle (perimeter) around the pipe;
- Known solutions do not simultaneously evaluate the area and penetration depth of corrosion-induced damages to the pipe wall.

### SUMMARY OF THE INVENTION

**Technical problem.** The techniques and solutions for industrial pipeline corrosion testing disclosed in state-of-the-art documents cover multiple US transducer configurations, but provide limited measurement functions and applications. Corrosion assessment using known technical solutions is insufficient or technically difficult. The technical problem of this invention is to detect the corrosion of pipelines more efficiently, with simpler configurations of US converters, and to characterize the detected corrosion agglomerations more accurately: to evaluate both their area and depth, and to classify them into types.

**Solution.** The invention discloses a US measurement system and corrosion assessment method for detecting and evaluating corrosion on the surface or wall of a pipe. The technical solution is based on US tomography, machine learning (ML) and classification, and performs complex data analysis that automatically assesses the type of corrosion in pipelines, classifying it as general and/or local corrosion. The US measurement system includes:
- an adaptively configurable set of spatially distributed US transducers or their arrays, with US signal generators, amplifiers, and analog-digital converters;
- a computer device with software for US measurement process management, measurement data analysis, DB management, and corrosion assessment.

The method comprises:
- the sets of quantitative parameters describing the excitation conditions of guided US waves, propagation and interaction with corrosion defects in pipes, as well as the database of these sets;
- the steps to select a set of quantitative parameters for the selected US guided wave excitation for a specific pipe being examined;
- the steps to perform digital simulation and real measurement data processing, including initial signal processing, tomographic reconstruction, calculation of a set of quantitative parameters, and comparison of simulation and measurement data;
- the quantitative parameter estimation and classification steps using machine learning methods and determination of corrosion type (local or general).

The novel features of the invention are as follows:
1) a digital model is used to compare the US measurement results with a known reference. It is a flexible and efficient solution that replaces the pipe calibration samples, which are practically used to perform reference measurements;
2) the scope of the method includes machine learning of digital models: a database with various modeled measurement configurations is provided and used for this purpose;
3) in the US measuring system, the minimum number of US transducers is sufficient: a transducer sending the US signal is installed in one place of the pipe and a US signal reception transducer, which is configured to perform pipe measurement with directed US waves, is installed in another place. In this case, there is no need for a complex system of multiple US transducers, where many US transducers must be arranged on the surface of the pipe in a certain order (for example, in a perimeter around the pipe).

**Effects.** The solution has the following technical effects:
- a minimal set of US converters or their arrays is sufficient in the system. The minimum configuration consists of 1 transmitting US transducer and 1 receiving transducer installed at different selected (e.g. accessible) locations in the pipe. After placing a set of spatially distributed US transducers or arrays, the measurement system is then configured (calibrated) adaptively and automatically according to the US transducers placed on the surface of the pipe (i.e., the object under investigation). When using US transducer arrays, each transmitting and receiving array can consist of 1 to 16 US transducer elements;
- a system with minimal configuration of US transducers enables the examination of corrosion changes and corrosion areas located along a sector of the pipe, without necessarily placing the US transducers around the perimeter of the pipe;
- the method analyzes US measurement data obtained on a specific pipe under examination and compares them with a digital model corresponding to this specific pipe/its type, describing the generation and propagation of US guided waves and interaction with typical corrosion defects. Therefore, to measure and compare with the reference, calibration samples of the real pipe are not needed;
- the method assesses both the area and the depth of corrosion damage to the pipe wall;
- the method evaluates the extent and type of corrosion according to quantitative parameters and their sets from the database of specialized sets of quantitative parameters;
- the method selects essential quantitative parameters from the simulation and measurement results, classifies the parameters using machine learning methods, and determines the type of detected corrosion damage (local or general corrosion).

**Applications.** The invention is applicable in order to distinguish between local corrosion characterized by a more rapidly progressing thinning of the pipe wall, and general corrosion, which cannot be distinguished by currently known measurement methods and long range inspection systems. The operating range provided by the invention is up to 5 meters, and sufficient spatial and around-the-pipe accuracy is ensured with a limited and optimized number of measurement positions.

### DESCRIPTION OF DRAWINGS

The essential aspects of the invention are explained in the drawings and diagrams. Drawings and diagrams are an integral part of the description of the invention and provided as a reference to the possible embodiment of the invention, but are not intended to limit the scope of the invention. The drawings are schematic and principled, and the sizes, the proportions and the specific implementation options of the objects depicted in them may differ within the scope of the invention.
- **Fig. 1**: US measurement system diagram for corrosion assessment in the test object (industrial pipe): **1** - the DB of quantitative parameter sets; **1.1** - the set of quantitative parameters (one DB record out of many); **4** - the algorithms/programs implementing the steps of the method; **6** - the computer for data processing and control; **7** - the digital reference (model) for generation and propagation of guided US waves; **8** - the adaptively configurable US measurement system and the spatially distributed set of US transducers or arrays; **8.2** - the adaptively configured control data (parameters); **8.1** - the registered and digitized US signals; **9** - the object under examination (pipe affected by corrosion), with different types of defects caused by corrosion: **9.1** - the general corrosion, **9.2** - the local corrosion; **10** - the guided US waves propagating through the object under examination.

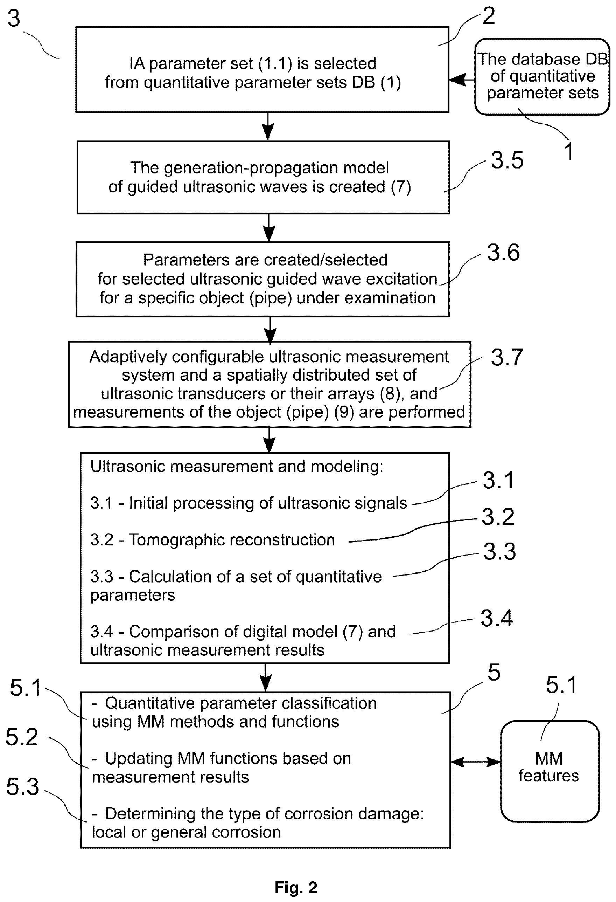

- **Fig. 2**: The steps of corrosion assessment method: **2** - the algorithm of selection of the set of qualitative parameters **(1.1)** for the selective excitation of directed US waves for the pipe under examination; **3** - the modeling and processing of the measurement data: **3.1** - the initial processing of US signals (filtering, averaging, segmentation with the time windows), **3.2** - tomographic reconstruction, **3.3** - calculation of the set of quantitative parameters, **3.4** - comparison of the digital reference and the measurement data; **3.5** - the simulation of digital reference; **3.5, 3.6** - the selection of parameters for US measurement; **5, 5.1, 5.2, 5.3** - the quantitative parameter classification algorithms using machine learning methods, and corrosion type determination.

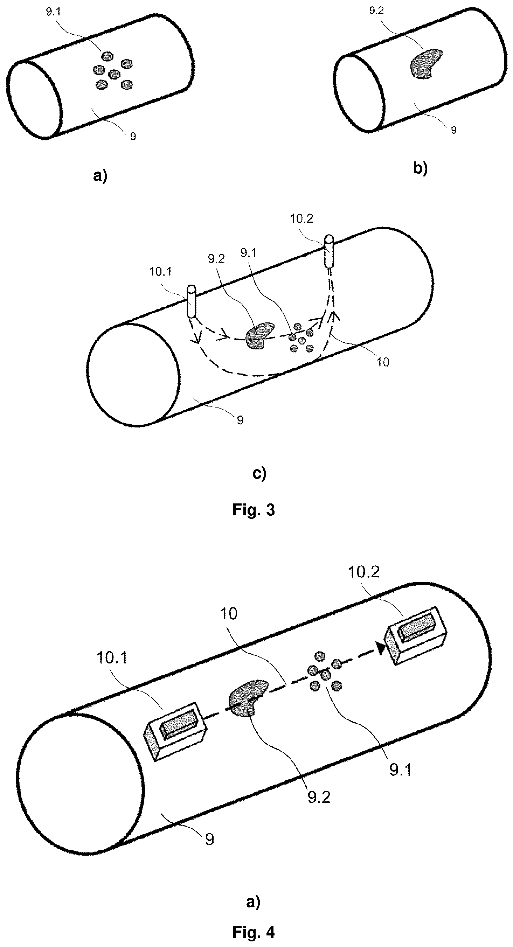

- **Fig. 3**: The investigated object (pipe) with different types of corrosion defects:
(a) The general corrosion **9.1;**
(b) The local corrosion **9.2;**
(c) The pipe **9** with US transducers **10.1** and **10.2** installed and US waves **10,** propagating between US transducers **10.1** and **10.2** through corrosion defects **9.1** and **9.2.**

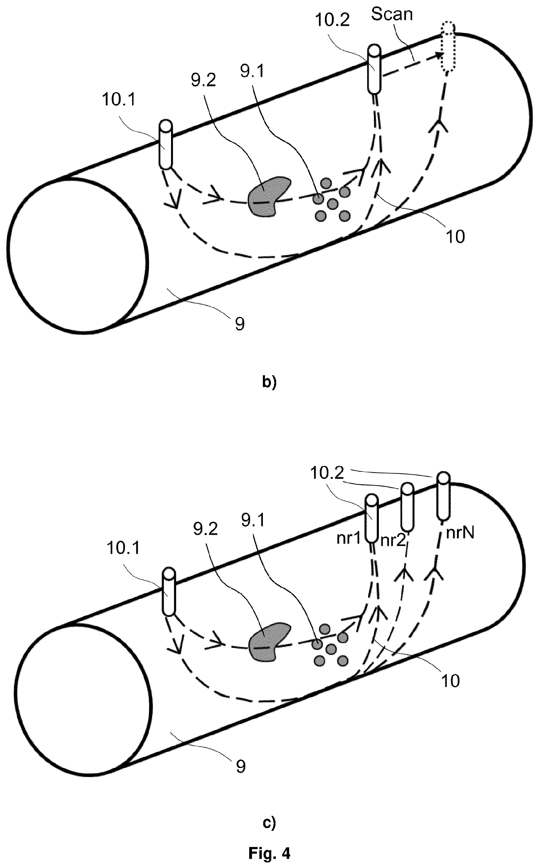

- **Fig. 4**: Arrangement of the ultrasonic transducers:
(a) The multi-element arrays of US converters **10.1** and **10.2,** forming guided US waves **10** in the walls of the pipe **9;**
(b) The single-element transmitting and receiving contact US transducers **10.1** and **10.2,** wherein US receiver **10.2** is mechanically scanned along the pipe **9,** to overlap several spatial positions where the guided US waves **10** are recorded after their interaction with defects **9.1** and **9.2,**
(c) The single-element receivers **10.1** and **10.2** (1, 2, ..., *N*) arranged in different spatial positions, switched according to the selection algorithm operating in the US measurement system.

### DETAILED DESCRIPTION OF THE INVENTION

The invention comprises a hardware system for measuring US, and a corrosion assessment method comprising the steps of signal and data processing, where the system and the method comprise a single technical solution. The steps of the method are partially or fully realized by computer algorithms and corresponding software modules.

**Ultrasonic measuring system.** The US measuring system for evaluating corrosion in the object under investigation (**9**), for example, in an industrial pipe, comprises the following hardware-system components (Fig. 1):
- the adaptively configurable US measurement subsystem, comprising a spatially distributed (mounted on the test object (**9**) set of US converters or gratings (**8**), US signal generators, receiver-amplifiers, analog-to-digital converters, etc.
- the computer or computing device (**6**), with at least one processor and at least one memory module, wherein
   ∘ The memory module stores parameters, databases, models, measurement results, registered signals, PI modules, and other data needed to implement the method;
   ∘ The processor executes the steps of the method, controls the US measurement processes, processes the data, performs simulation, machine learning and classification, and ensures the execution of all actions necessary to implement the method.
   • the system does not use a physical reference test object (9) against which the corrosion damage of the test object (9) would be evaluated. This reference is replaced by a digital reference stored and modeled in the computer memory, and an analytically described set of quantitative parameters (1.1) stored in the database (1).

**US transducers and signals.** The US measurement system uses single-element US transducers or arrays of US transducers that form guided US waves. The operating frequencies of single-element US transducers and the frequency range of generated/received signals cover 30-200 kHz. Operating frequencies of multi-element US arrays can reach up to 1.5-2 MHz. In ultrasonic arrays, the number of elements can be from 1 to 16.

An important feature of the invention is the scanning/measurement of the object under examination (9) with guided US waves. US transducers or arrays (8) are mounted on the test object (9) and excited to generate guided US waves (10) in the intended region of the object (9). Applications of guided US waves and their modes (longitudinal, flexural, and torsional) in corrosion research are known, for example, from the document **[3].**

**Arrangement of US converters.** The system comprises the adaptively configurable US measurement system and the spatially distributed set of US converters or their arrays **(8).** This set comprises at least 1 transmitting US transducer and 1 receiving US transducer or arrays of US transducers installed on the test object **(9),** as well as US signal generators, amplifiers, analog-to-digital converters, etc.

US transducers or their arrays **(8)** must be placed on the object under examination (9) and configured and controlled in such a way as to generate guided US waves in the intended region of the object under examination (9), the waves propagating in intended directions through the object under examination and suspected or to-be-checked corrosion damages in it;

Guided US waves in the object under examination (9) can be generated in different modes, depending on the circumstances and limitations of the examination. In reference to the mode, the direction of excitation of the object **(9)** (pipe) can be selected as longitudinal, flexural, or torsional. Also, for example, the selection can be made with a dominant longitudinal symmetric or a dominant vertical direction asymmetric displacement component. These types of modes and their generation are known from prior art documents such as **[3]** and are therefore not detailed.

Guided US waves can also be generated and received with the help of individual single US transducers. The minimum US transducers configuration comprises 1 transmitting US transducer and 1 receiving US transducer installed at different selected (e.g. accessible) locations in the pipe. Such a minimal configuration allows studying the sector along the pipe, when the US transducers are not arranged in a circle around the pipe (perimeter), but in a spatially sparse manner along the pipe, as shown in Figures 4 b and c. After placing a set of US transducers or arrays in space, the measurement system is then configured (calibrated) adaptively and automatically according to the US transducers placed on the surface of the pipe. Figure 4b shows single-element contact-type US converters **(10.1, 10.2)** for transmitting and receiving, wherein US receiver **10.2** mechanically scans along the pipe **9** to cover several spatial positions where the guided US waves **10** are recorded after their interaction with defects **9.1** and **9.2.** Figure 4c shows single-element receivers **10.1** and **10.2** (1, 2, ..., N) arranged in different spatial positions, switched according to the selection algorithm operating in the US measurement system.

Additionally, the US measurement system comprises means (methodological steps) to adaptively configure the spatially distributed set of US transducers or their arrays **(8).**

**Corrosion assessment method.** The corrosion assessment method (**4**) implemented in the US measurement system comprises the following steps and data modules, which are also shown in Figure 2:
- The quantitative parameter sets (**1.1**) and their database (**1**), storing more than one of such sets (**1.1**);
- The algorithm **(2)** for selecting the quantitative set of parameters **(1.1)** for the excitation of guided US waves in the object under examination (pipe);
- The creating of a digital reference **(7)** from the selected set of quantitative parameters **(1.1);**
- The US measurement in the object under examination **(9),** with selected quantitative parameters as follows:
   ∘ The generation of guided US waves and registration of US measurement signals;
   ∘ The pre-processing of registered US measurement signals;
   ∘ The tomographic reconstruction of the object under examination (pipe) from the US measurement signals;
   ∘ The calculation of a set of quantitative parameters from the measurement signals and/or reconstructed tomographic image;
- The comparison (3) of digital simulation and US measurement data, wherein the result of the comparison is a multidimensional data module (MDDM);
- The quantitative parameter classification using machine learning (ML) and corrosion type determination (5) from the MDDM module.

**The sets of quantitative parameters.** The sets of quantitative parameters are used in the corrosion assessment method. The invention provides the database (DB) of such sets of parameters containing many different sets. These sets of parameters are structural (geometric-material) descriptions of various possible (practically used) and measured pipe options.

After selecting the most suitable set of quantitative parameters **(1.1)** from the DB **(1)** (where the set corresponds to the real pipe under examination), then, according to this selected set of parameters:
- An analytical (or partially analytical) model of the pipe is created, which identifies the modes of guided US waves propagating through the pipe of the same configuration, for example: longitudinal, flexural, or torsional. Also, for example, a dominant longitudinal symmetric or a dominant vertical direction asymmetric displacement component is included.
- And the frequencies, the phase and the group velocities of the corresponding selected modes are identified.

In the next step, the finite element model of the pipe is created, in which the propagation of guided US waves of the selected mode is simulated, and the simulation result produces a virtual 3D-volume of the propagation of US guided waves in the digital model of the pipe. Said virtual 3D-volume can be compared with a tomographic 3D image of a real pipe, obtained by measuring the pipe with real propagated US guided waves and registered US signals.

Comparison of simulation and US measurement results can be done before or after US tomographic reconstruction:
- In the first case, US signals modeled by a set of quantitative parameters are compared with US signals measured in a real pipe;
- In the second case, a virtual 3D volume modeled by finite elements is compared with a tomographic 3D image of a real object (pipe).

As a result of the comparisons, the differences between the digital model and the measurement results are represented by the multidimensional data module (MDDM). This MDDM module can include errors between the measured pipe and its digital model, which can be minimized by optimizing the parameters of the digital model. Also, every inhomogeneity of the measured pipe is represented in the MDDM module, such as newly formed corrosion defects or cracks that are not present in the digital model.

If an unknown pipe is measured for the first time, for which there is no suitable set of quantitative parameters in the database, then the initial set of quantitative parameters can be created from the results of the first US measurement, based on which the initial values of the quantitative parameters, such as pipe dimensions, material and damage characteristics, are estimated and recorded into the DB of quantitative parameter sets.

**Selecting a set of parameters.** The set of quantitative parameters **(1.1)** can be selected in several ways. In one case, a specific type of pipe is manually entered into the system, the liquid transported through the pipe and the age of the pipe's operation is indicated: according to these parameters, the search algorithm will find the closest set of quantitative parameters in the database **(1).** In another case, the system performs the first US measurement, composes a set of parameters, and, based on the minimum differences between the measurement and DB parameter sets, selects the closest set of quantitative parameters from the DB. Yet in another case, when a suitable set of quantitative parameters is not available in the DB, the system performs the first measurement and automatically forms the initial set of parameters from the measurement results, which is recorded in the DB **(1).**

**Types of corrosion.** Different-type corrosion can form itself in the object under examination (pipe) (Fig. 3), which is characterized by different structure of corrosion damage, interaction with US signals, and criticality for further operation of the pipe. Document **[1]** specifies at least two conditional types of corrosion: local and general corrosion. Local corrosion (Fig. 3a) refers to the damage of a small area with a significant thinning of the pipe wall thickness, that is, a corrosive depression (thinning), pits in the wall, or even a corrosion hole. The second type is general corrosion on the wall surface (Figure 3b), which involves a larger but shallow area of minor corrosive damage on the surface or volume of the wall. The different types of corrosion and defects are explained in document **[2]** and shown in Figure 1 of the present document. These types are characterized by different properties of US signal propagation, reflection from defects, scattering. Their criticality for the further operation of the pipe also differs. General corrosion does not reduce the effective thickness of the pipe as much as local pitting, which progresses relatively rapidly in time towards a corrosive hole. Therefore, it is important to distinguish between these types of corrosion in corrosion assessments in order to provide appropriate preventive measures.

**Digital reference.** Unlike US methods of corrosion assessment, where reference pipe samples can be used, in this invention a virtual digital model of the pipe serves as a reference. That is, a standard of the object under examination (pipe) is prepared in the digital environment, which sufficiently accurately describes the structural (geometrical-material) properties of the object, the characteristics of US transducers, the placement of US transducers in relation to the object (for example, coordinates on the pipe wall), the types of finite elements that make up the model, US characteristics of guided wave propagation and interaction with the model. Virtual defects interacting with US signals can also be included in the model. During the examination of the real object, the digital model **(7)** is compared with the propagation characteristics of US signals measured in the real object under examination.

The digital model (7) can be prepared and adapted using special tools and systems for such modeling. For example, the Finite Element Method and modeling systems implementing it can be used. Within the scope of the invention, the methods and means for preparing and using the digital model **(7)** are not limited.

**Tomography.** Tomographic reconstruction is performed from projections of US guided wave signals registered by US transducers or their arrays located in different spatial positions. US guided waves, which had been propagated in the direction provided by the pipe wall and encountered defects in the propagation path, are registered in the receiving US transducer with changes in the US signal (reflections, attenuations, delay times, phase changes, influence caused by phase and group velocity dispersion). According to the changes of the recorded US signal, with the help of tomographic reconstruction, the obstacles encountered in the path of the US signal propagation, their coordinates and characteristics are reconstructed, allowing the physical properties of the obstacle to be evaluated in further steps. Within the scope of the invention, the methods and means of tomographic reconstruction are not limited and freely chosen.

**Machine learning and classification.** Machine learning (ML) and statistical methods for corrosion assessment are disclosed in documents **[1], [2].** In the present invention, the ML and classification methods and means are not limited and may be selected from a series of the known ones. In embodiments of the invention, corrosion defects can be described in a digital model (**7**) by specifying their geometric dimensions or described by machine learning (ML) regression functions, and used to predict future corrosion changes. For example, an embodiment of the ML can be to see the regularity of the decrease of the thickness of the pipe wall over time, as shown in the document **[2],** Figures 13-15. In another case, the normalized function of the distribution area of the pipe wall thickness (shown in Figures 9 and 16 of document **[1])** and its changes over time allow predicting corrosion progress and criticality for pipe operation.

Documents **[1],** [**2**] mention that in many cases the regularities and statistical data of the occurrence and progression of corrosion in pipes of various types and purposes are known. On the other hand, during the operation of a specific pipe, by periodically measuring it and accumulating the data of these measurements, it is possible to predict the progression of corrosion in this particular pipe from the accumulated historical data (cumulative distribution functions), and to predict the time when the effect of corrosion will become critical for the further operation of the pipe.

In these and other cases of ML and statistics accumulation disclosed in [**1**], [**2**], the set of quantitative parameters (**1.1**) can include typical (most frequently occurring) corrosion defects, the data of which are obtained during primary and secondary processing from simulations and experimental measurements.

**System initialization.** After installing the US measuring transducers **(10.1, 10.2)** on the object under examination (pipe wall) (**9**), the measurement parameters are set adaptively in the system: coordinates of US transducers, distances, signal propagation speeds, attenuations, etc. US converters **(10.1, 10.2)** or a set of their arrays (**8**) distributed in the space of the adaptively configurable system are placed manually, for example, in the places of the pipe under examination, wherein the places are specified (recommended) in the digital reference (**7**). After that, the system adapts only by iterative switching of US sensors, selection of excitation frequency, excitation of US waves by respective transmitters and reception by respective US receivers; everything is done by software and electronic switching, that is, fine tuning of the correspondence between the model and the real pipe is carried out - calibration of the digital model with a real pipe.

**Method software.** The method is implemented by software (PI) that comprises computer algorithms and software modules that perform the following steps and functions of the method:
- formation of the object's digital model (**7**) from the qualitative set of parameters (**1.1**), modeling of the propagation of US guided wave signals in the object's model (7)**;**
- calibration of US measurement system with the object under examination (**9**) with the digital model (**7**);
- selecting a set of qualitative parameters (**1.1**) from the database (**1**);
- formation of the database (**1**) of qualitative parameter sets (**1.1**);
- comparison of US measurement results with a digital model (**7**) and formation of a multidimensional data module MDDM;
- machine learning ML features;
- classification functions of the damage by the corrosion.

### LIST OF NON-PATENT LITERATURE

**1.** STONE, Mark. Wall Thickness Distributions for Steels in Corrosive Environments and Determination of Suitable Statistical Analysis Methods. Berlin, Germany: 4th European-American Workshop on Reliability of NDE, Jun 2009.
**2.** The Welding Institute. RR16. Guidelines for use of Statistics for Analysis of Sample Inspection of Corrosion. Cambridge, United Kingdom: HSE Books, 2002. ISBN 0 7176 2554 0.
**3.** Guided ultrasonic wave detection in offshore riser corrosion. https://www.twi-global.com/technical-knowledge/published-papers/detection-of-corrosion-in-offshore-risers-using-guided-ultrasonic-waves-june-2007, 2022.
**4.** Tong Junkai et al, "Deep learning inversion with supervision: A rapid and cascaded imaging technique", Ultrasonics, IPC SCIENCE AND TECHNOLOGY PRESS LTD. GUILDFORD Vol. 122, 7 Feburary 2022, pages 1-13, ISSN: 0041-624X, https://doi.org/10.1016/j.ultras.2022.106686
**5.** Zhang Haiyan et al, "Ultrasonic guided wave tomography of pipes", AUDIO LANGUAGE AND IMAGE PROCESSING (ICALIP), 2010 International Conference on, IEEE, PISCATAWAY, NJ, USA, 23 November 2010, pages 1729-1733, DOI: 10.1109/ICALIP.2010.5684369
**6.** Pierre Belanger et al, "Guided wave diffraction tomography within the born approximation", IEEE Transactions on Ultrasonincs, Ferroelectrics, and Frequency Control, USA, vol. 54, no. 6, 1 June 2010, pages 1405-1418, DOI: 10.1109/TUFFC.2010.1559
**7.** Lomazzi et al, "Convolutional Neural Networks for Ultrasonic Guided Wave-Based Structural Damage Detection and Localisation", 2021-01-01, Structural Health Monitoring 2021: Enabling Next-Generation SHM for Cyber-Physical Systems; IWSHM 2021; STANFORD UNIVERSITY; 15-17 March 2022, pages 558565, ISBN: 978-1-60595-687-9

## Claims

1. An ultrasonic, US, examination method for assessing corrosion damage in an object under examination (9), using a US measuring system installed on the object under examination (9), the method comprising the following steps:
• installation of the transmitting and receiving US transducers or their arrays (10.1, 10.2) of the US system on the object under examination (9) and their configuration to propagate guided US waves (10) in the intended region of the object under examination (9);
• excitation of the transmitting US transducers (10.1) by generated signals, and recording of the US guided wave signals that have passed through the object under examination (9), wherein the recording is carried out by the receiving US transducers (10.2);
• pre-processing of the registered US signals such as filtering, averaging, and segmentation by time windows;
• reconstructing a tomographic image from the registered US signals, thereby obtaining a reconstructed tomographic image;
• comparing the reconstructed tomographic image with a reference tomographic image and obtaining a differential tomographic image;
• identification of the damage by the corrosion,
**wherein**
a) the object under examination (9) is a pipe (9) having walls with a thickness;
b) the US transducers, at least, 1 transmitting and at least 1 receiving US transducers, are allocated on the pipe (9), each with respect to other, at least, along the pipe (9) under inspection, for directing the guided US waves at least along the pipe under inspection;
c) the reference of the object under examination (9) is a digital model (7) of said pipe (9), formed by computer modeling from a set of quantitative parameters (1.1), which includes the structural characteristics of the pipe (9), the characteristics of US signals and their propagation in the pipe (9) walls;
d) in the step of comparing the digital reference (7) with the results of US measurements, a multidimensional data module MDDM of the pipe (9) is formed, which comprises a differential tomographic image of the pipe (9) and a set of quantitative parameters thereof;
e) the method comprises at least one machine learning ML step, including at least one corrosive damage in the set of reference quantitative parameters (1.1), or at least one ML regression function corresponding to a statistical distribution of the damage by the corrosion in the pipe (9);
f) the method comprises at least one corrosional damage classification step, where the damage by the corrosion detected in the MDDM module is classified using ML functions, as a minimum, into general corrosion (9.1) and localized corrosion with significant thinning of the pipe wall (9.2).

2. The method according to claim 1, **wherein** the set of quantitative parameters (1.1) comprises at least:
• the structural characteristics of the object under examination (9);
• the characteristics of US converters or arrays and their positioning on the object under examination (9);
• US guided wave generation and signal measurement characteristics;
• the characteristics of the damage by the corrosion of the object under examination (9) and/or the statistical-analytical functions describing them.

3. The method according to claims 1 and 2, **wherein** it uses a database DB (**1**) comprising more than one set of quantitative parameters (**1.1**).

4. The method according to claim 1, **wherein** the multidimensional data module MDDM is formed, comprising at least:
• a differential tomographic image obtained by comparing the reconstructed tomographic image of the measured object (9) and the three-dimensional image of the digital model;
• a set of quantitative parameters identified from the differential image, comprising the geometric parameters of the damage by the corrosion detected during the measurement for the object (9).

5. The method according to Claims 1 and 4, **wherein** the area, the length, the width and the depth of corrosive damage to the pipe wall are the quantitative parameters of general and local corrosion evaluated in the measurement result;

6. The method according to any one of Claims 1 to 3, **wherein** the sets of quantitative parameters (1.1) and their DB (1) are formed by any of the following methods or their combination:
• by manually entering and adjusting the values of the set of quantitative parameters (1.1);
• by entering statistical data of corrosive damage and regression-prognostic functions from other experiments, measurements and modeling results;
• by performing measurements in a new unknown object and accumulating historical-statistical data of its measurements.

7. The method according to any one of Claims 1 to 3, **wherein** the set of quantitative parameters (1.1) for measuring the object is selected by any of the following methods or their combination:
• by manually entering and adjusting the values of the set of quantitative parameters (1.1);
• after performing a calibration US measurement of the object (9), forming a set of measurement parameters, and according to the minimum differences between it and the DB sets, the closest set of quantitative parameters (1.1) is selected;
• after the calibration measurement of the US of the object, a set of quantitative parameters is formed from the results of this measurement, which is considered the reference set of quantitative parameters (1.1), which is also recorded in the database (1).

8. The method according to Claim 1, **wherein** the digital reference (7) and the propagation of US signals in it are modeled by the Finite Element Method and corresponding software modeling tools.

9. The method according to any one of Claims 1 to 8, **wherein** it further comprises the step of adapting the system, which, according to the calibration measurements performed by the US transducers installed on the object under examination (9), adjusts the parameters of the digital model (7) by minimizing the differential errors between the object under examination (9) and the digital model (7).

10. An ultrasonic, US, measurement system for assessing corrosion damage (9.1, 9.2) and configured for performing the US test method according to claims 1-9, comprising at least
• the object under examination (9) which is a pipe (3) having its walls with a thickness;
• at least 1 transmitting and 1 receiving US transducers or arrays thereof installed onto said pipe (9) at least with respect to each other along the pipe (9) under inspection;
• US signal generators, amplifiers, and analog-to-digital converters;
• a computer device (6), comprising at least one processor and at least one memory module, implementing the data structures of the US examination method, the databases, and executing the steps of the method programmatically;
**wherein** within the system
• the measurement reference is implemented by a digital reference (7), formed by computer modeling in memory from a set of quantitative parameters (1.1), and
• US transducers or their arrays are placed on the pipe (9) and configured so as to generate guided US waves in the intended region of the pipe (9) propagating in intended directions through the examined corrosion damages.

11. The system according to Claim 10, **wherein** the guided US waves are generated longitudinally, flexurally, or torsionally (rotationally) in the measured pipe (9) walls, with respect along the pipe (9), and also, a dominant longitudinal symmetric displacement component is included.

12. The system according to Claim 10, **wherein** the effective frequencies of the single US transducers or arrays thereof, and of the US waves are in the range from 30 kHz to 1.5 MHz.

13. The system according to Claim 10, **wherein** the number of cells in the arrays of US transducers is from 2 to 16.

14. The system according to Claim 10, **wherein** in the minimum configuration of 1 transmitting and 1 receiving US transducers, the US receiver (10.1) and/or the US transmitter (10.2) are arranged for mechanical scanning along the object under examination - the pipe (9), to overlap multiple spatial positions at which the guided US waves are recorded after their interaction with the defects.

15. A software implementing the method of examination according to Claims 1-9 to be carried out with a system according to claims 10 to 14, **wherein** it comprises the computer algorithms and the software modules that perform the following steps:
• the formation of the object's digital model (**7**) from the qualitative set of parameters (**1.1**), and the modeling of the propagation of US guided wave signals in the object's model (7);
• the calibration of US measurement system with the object under examination (9) with the digital model (**7**);
• the selection of the set of qualitative parameters (**1.1**) from the database (**1**);
• the formation of the database (**1**) of the qualitative parameter sets (**1.1**);
• the comparison of US measurement results with the digital model (**7**) and the formation of the multidimensional data module MDDM.

## Patentansprüche

1. Ultraschall(US)-Untersuchungsverfahren zum Bewerten von Korrosionsschäden an einem zu untersuchenden Objekt (9) unter Verwendung eines an dem zu untersuchenden Objekt (9) installierten US-Messsystems, wobei das Verfahren die folgenden Schritte umfasst:
• Installieren der übertragenden und empfangenden US-Wandler oder deren Anordnungen (10.1, 10.2) des US-Systems an dem zu untersuchenden Objekt (9) und Konfigurieren dieser zur Ausbreitung geführter US-Wellen (10) in der vorgesehenen Region des zu untersuchenden Objekts (9);
• Anregen der übertragenden US-Wandler (10.1) durch erzeugte Signale und Aufzeichnen der US-geführten Wellensignale, die das zu untersuchenden Objekt (9) durchlaufen haben, wobei das Aufzeichnen durch die empfangenden US-Wandler (10.2) ausgeführt wird;
• Vorverarbeiten der registrierten US-Signale wie etwa Filtern, Mitteln und Segmentieren nach Zeitfenstern;
• Rekonstruieren eines tomographischen Bildes aus den registrierten US-Signalen, wodurch ein rekonstruiertes tomographisches Bild erlangt wird;
• Vergleichen des rekonstruierten tomographischen Bildes mit einem tomographischen Referenzbild und Erlangen eines tomographischen Differenzbildes;
• Identifizieren des Schadens durch die Korrosion,
wobei
a) das zu untersuchende Objekt (9) ein Rohr (9) mit Wänden mit einer Dicke ist;
b) die US-Wandler, mindestens 1 übertragender und mindestens 1 empfangender US-Wandler, auf dem Rohr (9), jeder in Bezug zu dem anderen, mindestens entlang des zu inspizierenden Rohrs (9) angeordnet sind, um die geführten US-Wellen mindestens entlang des zu inspizierenden Rohrs zu lenken;
c) die Referenz des zu untersuchenden Objekts (9) ein digitales Modell (7) des Rohrs (9) ist, das durch Computermodellierung aus einem Satz quantitativer Parameter (1.1) gebildet wird, der die strukturellen Eigenschaften des Rohrs (9), die Eigenschaften von US-Signalen und ihre Ausbreitung in den Wänden des Rohrs (9) beinhaltet;
d) in dem Schritt des Vergleichens der digitalen Referenz (7) mit den Ergebnissen von US-Messungen ein mehrdimensionales Datenmodul (MDDM) des Rohrs (9) gebildet wird, das ein tomographisches Differenzbild des Rohrs (9) und einen Satz quantitativer Parameter davon umfasst;
e) das Verfahren mindestens einen Schritt des maschinellen Lernens (ML), beinhaltend mindestens einen korrosiven Schaden in dem Satz quantitativer Referenzparameter (1.1) oder mindestens eine ML-Regressionsfunktion, die einer statistischen Verteilung des Schadens durch die Korrosion in dem Rohr (9) entspricht, umfasst;
f) das Verfahren mindestens einen Klassifizierungsschritt für Korrosionsschäden umfasst, wobei der Schaden durch die in dem MDDM-Modul erkannte Korrosion unter Verwendung von ML-Funktionen mindestens in allgemeine Korrosion (9.1) und lokalisierte Korrosion mit deutlicher Verdünnung der Rohrwand (9.2) klassifiziert wird.

2. Verfahren nach Anspruch 1, wobei der Satz quantitativer Parameter (1.1) mindestens Folgendes umfasst:
• die strukturellen Eigenschaften des zu untersuchenden Objekts (9);
• die Eigenschaften von US-Konvertern oder -Anordnungen und deren Positionierung an dem zu untersuchenden Objekt (9);
• Erzeugen von US-geführten Wellen und Eigenschaften der Signalmessung;
• die Eigenschaften des Schadens durch die Korrosion des zu untersuchenden Objekts (9) und/oder die sie beschreibenden statistisch-analytischen Funktionen.

3. Verfahren nach Anspruch 1 und 2, wobei es eine Datenbank DB (1) verwendet, die mehr als einen Satz quantitativer Parameter (1.1) umfasst.

4. Verfahren nach Anspruch 1, wobei das mehrdimensionale Datenmodul (MDDM) mindestens Folgendes umfassend gebildet wird:
• ein tomographisches Differenzbild, das durch Vergleichen des rekonstruierten tomographischen Bildes des gemessenen Objekts (9) und des dreidimensionalen Bildes des digitalen Modells erlangt wird;
• einen Satz quantitativer Parameter, der aus dem Differenzbild identifiziert wurde, umfassend die geometrischen Parameter des während der Messung für das Objekt (9) erkannten Schadens durch die Korrosion.

5. Verfahren nach Anspruch 1 und 4, wobei die Fläche, die Länge, die Breite und die Tiefe des korrosiven Schadens der Rohrwand die quantitativen Parameter der allgemeinen und lokalen Korrosion sind, die in dem Messergebnis beurteilt werden.

6. Verfahren nach einem der Ansprüche 1 bis 3, wobei die Sätze quantitativer Parameter (1.1) und ihre DB (1) durch eines der folgenden Verfahren oder deren Kombination gebildet werden:
• durch manuelle Eingabe und Einstellen der Werte des Satzes quantitativer Parameter (1.1);
• durch Eingabe statistischer Daten von korrosiven Schäden und Regressionsprognosefunktionen aus anderen Experimenten, Messungen und Modellierungsergebnissen;
• durch Durchführen von Messungen an einem neuen unbekannten Objekt und Sammeln historisch-statistischer Daten seiner Messungen.

7. Verfahren nach einem der Ansprüche 1 bis 3, wobei der Satz quantitativer Parameter (1.1) zum Messen des Objekts durch eines der folgenden Verfahren oder deren Kombination ausgewählt wird:
• durch manuelle Eingabe und Einstellen der Werte des Satzes quantitativer Parameter (1.1);
• nach Durchführen einer Kalibrierungs-US-Messung des Objekts (9) Bilden eines Satzes von Messparametern, und gemäß den minimalen Differenzen zwischen diesem und den DB-Sätzen wird der ähnlichste Satz quantitativer Parameter (1.1) ausgewählt;
• nach der Kalibrierungsmessung des US des Objekts wird aus den Ergebnissen dieser Messung ein Satz quantitativer Parameter gebildet, der als Referenzsatz quantitativer Parameter (1.1) gilt, der auch in der Datenbank (1) aufgezeichnet wird.

8. Verfahren nach Anspruch 1, wobei die digitale Referenz (7) und die Ausbreitung von US-Signalen darin durch die Finite-Elemente-Methode und entsprechende Softwaremodellierungswerkzeuge modelliert werden.

9. Verfahren nach einem der Ansprüche 1 bis 8, wobei es ferner den Schritt des Anpassens des Systems umfasst, der gemäß den Kalibrierungsmessungen, die durch die an dem zu untersuchenden Objekt (9) installierten US-Wandlern durchgeführt werden, die Parameter des digitalen Modells (7) einstellt, indem die Differenzfehler zwischen dem zu untersuchenden Objekt (9) und dem digitalen Modell (7) minimiert werden.

10. Ultraschall(US)-Messsystem zur Bewertung von Korrosionsschäden (9.1, 9.2) und konfiguriert zum Durchführen des US-Testverfahrens nach den Ansprüchen 1-9, umfassend mindestens
• das zu untersuchende Objekt (9), bei dem es sich um ein Rohr (3) handelt, dessen Wände eine Dicke aufweisen;
• mindestens 1 übertragenden und 1 empfangenden US-Wandler oder Anordnungen davon, die an dem Rohr (9) mindestens in Bezug zueinander entlang des zu inspizierenden Rohrs (9) installiert sind;
• US-Signalerzeuger, Verstärker und Analog-Digital-Konverter;
• eine Computervorrichtung (6), die mindestens einen Prozessor und mindestens ein Speichermodul umfasst, die Datenstrukturen des US-Untersuchungsverfahrens und die Datenbanken implementiert und die Schritte des Verfahrens programmatisch ausführt;
wobei innerhalb des Systems
• die Messreferenz durch eine digitale Referenz (7) implementiert wird, die durch Computermodellierung in dem Speicher aus einem Satz quantitativer Parameter (1.1) gebildet wird, und
• US-Wandler oder deren Anordnungen auf dem Rohr (9) platziert sind und so konfiguriert sind, dass sie in der vorgesehenen Region des Rohrs (9) geführte US-Wellen erzeugen, die sich in vorgesehenen Richtungen durch die untersuchten Korrosionsschäden ausbreiten.

11. System nach Anspruch 10, wobei die geführten US-Wellen in Längsrichtung, in Biegung oder in Torsion (Rotation) in den gemessenen Wänden des Rohrs (9) in Bezug auf das Rohr (9) erzeugt werden und auch eine dominante längssymmetrische Verschiebungskomponente beinhaltet ist.

12. System nach Anspruch 10, wobei die effektiven Frequenzen der einzelnen US-Wandler oder Anordnungen davon und der US-Wellen im Bereich von 30 kHz bis 1,5 MHz liegen.

13. System nach Anspruch 10, wobei die Anzahl der Zellen in den Anordnungen von US-Wandlern 2 bis 16 beträgt.

14. System nach Anspruch 10, wobei in der Minimalkonfiguration von 1 übertragenden und 1 empfangenden US-Wandler der US-Empfänger (10.1) und/oder der US-Übertrager (10.2) zur mechanischen Abtastung entlang des zu untersuchenden Objekts - dem Rohr (9) - angeordnet sind, um mehrere räumliche Positionen zu überlappen, an denen die geführten US-Wellen nach ihrer Wechselwirkung mit den Defekten aufgezeichnet werden.

15. Software, die das Untersuchungsverfahren nach den Ansprüchen 1-9 implementiert, um mit einem System nach den Ansprüchen 10 bis 14 ausgeführt zu werden,
wobei es die Computeralgorithmen und die Softwaremodule umfasst, die die folgenden Schritte durchführen:
• das Bilden des digitalen Modells (7) des Objekts aus dem qualitativen Satz von Parametern (1.1) und das Modellieren der Ausbreitung von US-geführten Wellensignalen in dem Objektmodell (7);
• das Kalibrieren des US-Messsystems mit dem zu untersuchenden Objekt (9) mit dem digitalen Modell (7);
• das Auswählen des Satzes qualitativer Parameter (1.1) aus der Datenbank (1);
• das Bilden der Datenbank (1) der qualitativen Parametersätze (1.1);
• das Vergleichen von US-Messergebnissen mit dem digitalen Modell (7) und das Bilden des mehrdimensionalen Datenmoduls (MDDM).

## Revendications

1. Procédé d'examen par ultrasons, US, permettant d'évaluer des dommages causés par la corrosion dans un objet examiné (9), à l'aide d'un système de mesure US installé sur l'objet examiné (9), le procédé comprenant les étapes suivantes :
• l'installation des transducteurs US émetteurs et récepteurs ou de leurs réseaux (10.1, 10.2) du système US sur l'objet examiné (9) et leur configuration pour propager les ondes US guidées (10) dans la région prévue de l'objet examiné (9) ;
• l'excitation des transducteurs US émetteurs (10.1) par des signaux générés, et l'enregistrement des signaux d'ondes guidées US qui ont traversé l'objet examiné (9), l'enregistrement étant effectué par les transducteurs US récepteurs (10.2) ;
• le prétraitement des signaux US enregistrés tels que filtrage, moyenne et segmentation par fenêtres temporelles ;
• la reconstruction d'une image tomographique à partir des signaux US enregistrés, obtenant ainsi une image tomographique reconstruite ;
• la comparaison de l'image tomographique reconstruite avec une image tomographique de référence et l'obtention d'une image tomographique différentielle ;
• l'identification des dommages causés par la corrosion, dans laquelle
a) l'objet examiné (9) est un tuyau (9) ayant des parois d'une épaisseur ;
b) les transducteurs US, au moins 1 transducteur US émetteur et au moins 1 transducteur US récepteur, sont répartis sur le tuyau (9), chacun par rapport à l'autre, au moins, le long du tuyau (9) sous inspection, pour diriger les ondes US guidées au moins le long du tuyau sous inspection ;
c) la référence de l'objet examiné (9) est un modèle numérique (7) dudit tuyau (9), formé par modélisation informatique à partir d'un ensemble de paramètres quantitatifs (1.1), qui comprend les caractéristiques structurelles du tuyau (9), les caractéristiques des signaux US et leur propagation dans les parois du tuyau (9) ;
d) dans l'étape de comparaison de la référence numérique (7) avec les résultats des mesures US, un module de données multidimensionnelles MDDM du tuyau (9) est formé, qui comprend une image tomographique différentielle du tuyau (9) et un ensemble de paramètres quantitatifs de celui-ci ;
e) le procédé comprend au moins une étape d'apprentissage automatique ML, incluant au moins un endommagement par corrosion dans l'ensemble de paramètres quantitatifs de référence (1.1), ou au moins une fonction de régression ML correspondant à une distribution statistique de l'endommagement par la corrosion dans le tuyau (9) ;
f) le procédé comprend au moins une étape de classification des dommages par corrosion, dans laquelle les dommages causés par la corrosion détectés dans le module MDDM sont classés à l'aide de fonctions ML, au minimum, en corrosion générale (9.1) et en corrosion localisée avec amincissement significatif de la paroi du tuyau (9.2).

2. Procédé selon la revendication 1, dans lequel l'ensemble de paramètres quantitatifs (1.1) comprend au moins :
• les caractéristiques structurelles de l'objet examiné (9) ;
• les caractéristiques des convertisseurs ou réseaux US et leur positionnement sur l'objet examiné (9) ;
• les caractéristiques de génération d'ondes guidées et de mesure du signal US ;
• les caractéristiques des dommages causés par la corrosion de l'objet examiné (9) et/ou les fonctions statistiques et analytiques les décrivant.

3. Procédé selon les revendications 1 et 2, dans lequel il utilise une base de données DB (1) comprenant plus d'un ensemble de paramètres quantitatifs (1.1).

4. Procédé selon la revendication 1, dans lequel le module de données multidimensionnelles MDDM est formé, comprenant au moins :
• une image tomographique différentielle obtenue en comparant l'image tomographique reconstruite de l'objet mesuré (9) et l'image tridimensionnelle du modèle numérique ;
• un ensemble de paramètres quantitatifs identifiés à partir de l'image différentielle, comprenant les paramètres géométriques de l'endommagement par la corrosion détecté lors de la mesure pour l'objet (9).

5. Procédé selon les revendications 1 et 4, dans lequel la surface, la longueur, la largeur et la profondeur des dommages corrosifs sur la paroi du tuyau sont les paramètres quantitatifs de la corrosion générale et locale évalués dans le résultat de mesure.

6. Procédé selon l'une quelconque des revendications 1 à 3, dans lequel les ensembles de paramètres quantitatifs (1.1) et leur DB (1) sont formés par l'un quelconque des procédés suivants ou leur combinaison :
• en saisissant et en ajustant manuellement les valeurs de l'ensemble des paramètres quantitatifs (1.1) ;
• en saisissant des données statistiques sur les dommages corrosifs et des fonctions de régression-pronostic issues d'autres expériences, mesures et résultats de modélisation ;
• en effectuant des mesures dans un nouvel objet inconnu et en accumulant des données historiques et statistiques de ses mesures.

7. Procédé selon l'une quelconque des revendications 1 à 3, dans lequel l'ensemble de paramètres quantitatifs (1.1) pour mesurer l'objet est sélectionné par l'un quelconque des procédés suivants ou leur combinaison:
• en saisissant et en ajustant manuellement les valeurs de l'ensemble des paramètres quantitatifs (1.1) ;
• après avoir effectué une mesure US d'étalonnage de l'objet (9), en formant un ensemble de paramètres de mesure, et en fonction des différences minimales entre celle-ci et les ensembles DB, l'ensemble le plus proche de paramètres quantitatifs (1.1) est sélectionné ;
• après la mesure d'étalonnage des US de l'objet, un ensemble de paramètres quantitatifs est formé à partir des résultats de cette mesure, qui est considéré comme l'ensemble de référence des paramètres quantitatifs (1.1), qui est également enregistré dans la base de données (1).

8. Procédé selon la revendication 1, dans lequel la référence numérique (7) et la propagation des signaux US dans celle-ci sont modélisées par la méthode des éléments finis et les outils de modélisation logiciels correspondants.

9. Procédé selon l'une quelconque des revendications 1 à 8, dans lequel il comprend en outre l'étape d'adaptation du système, qui, en fonction des mesures d'étalonnage effectuées par les transducteurs US installés sur l'objet examiné (9), ajuste les paramètres du modèle numérique (7) en minimisant les erreurs différentielles entre l'objet examiné (9) et le modèle numérique (7).

10. Système de mesure par ultrasons, US, pour évaluer les dommages dus à la corrosion (9.1, 9.2) et configuré pour mettre en œuvre le procédé d'examen US selon les revendications 1 à 9, comprenant au moins
• l'objet examiné (9) qui est un tuyau (3) dont les parois ont une épaisseur ;
• au moins 1 transducteur US émetteur et 1 transducteur récepteur ou des réseaux de ceux-ci installés sur ledit tuyau (9) au moins l'un par rapport à l'autre le long du tuyau (9) sous inspection ;
• des générateurs de signaux, amplificateurs et convertisseurs analogique-numérique US ;
• un dispositif informatique (6), comprenant au moins un processeur et au moins un module mémoire, mettant en œuvre les structures de données du procédé d'examen US, les bases de données, et exécutant les étapes du procédé par programmation;
dans lequel dans le système
• la référence de mesure est mise en œuvre par une référence numérique (7), formée par modélisation informatique en mémoire à partir d'un ensemble de paramètres quantitatifs (1.1), et
• des transducteurs US ou leurs réseaux sont placés sur le tuyau (9) et configurés de manière à générer des ondes US guidées dans la région prévue du tuyau (9) se propageant dans des directions prévues à travers les dommages de corrosion examinés.

11. Système selon la revendication 10, dans lequel les ondes US guidées sont générées longitudinalement, en flexion ou en torsion (en rotation) dans les parois du tuyau mesuré (9), par rapport au tuyau (9), et également, une composante de déplacement symétrique longitudinale dominante est incluse.

12. Système selon la revendication 10, dans lequel les fréquences efficaces des transducteurs US individuels ou de leurs réseaux, et des ondes US sont dans la plage de 30 kHz à 1,5 MHz.

13. Système selon la revendication 10, dans lequel le nombre de cellules dans les réseaux de transducteurs US est de 2 à 16.

14. Système selon la revendication 10, dans lequel dans la configuration minimale de 1 transducteur US émetteur et 1 transducteur US récepteur, le récepteur US (10.1) et/ou l'émetteur US (10.2) sont agencés pour un balayage mécanique le long de l'objet examiné, le tuyau (9), pour chevaucher plusieurs positions spatiales auxquelles les ondes US guidées sont enregistrées après leur interaction avec les défauts.

15. Logiciel mettant en œuvre le procédé d'examen selon les revendications 1 à 9, à mettre en œuvre avec un système selon les revendications 10 à 14,
dans lequel il comprend des algorithmes informatiques et des modules logiciels qui mettent en œuvre les étapes suivantes :
• la formation du modèle numérique de l'objet (7) à partir de l'ensemble qualitatif de paramètres (1.1), et la modélisation de la propagation des signaux d'ondes guidées US dans le modèle de l'objet (7) ;
• l'étalonnage du système de mesure US avec l'objet examiné (9) avec le modèle numérique (7) ;
• la sélection de l'ensemble des paramètres qualitatifs (1.1) à partir de la base de données (1) ;
• la constitution de la base de données (1) des ensembles de paramètres qualitatifs (1.1) ;
• la comparaison des résultats de mesure US avec le modèle numérique (7) et la formation du module de données multidimensionnelles MDDM.
